# EUROPÄISCHE PATENTANMELDUNG

(11) **EP 1 621 390 A2**
(43) Veröffentlichungstag der Anmeldung: **01.02.2006**
(21) Anmeldenummer: 05007708.0
(22) Anmeldetag: 08.04.2005
(51) Int. Cl.: B60N 2/07

(54) **Längsführung für Fahrzeugsitze**

(30) Priorität: 28.07.2004 DE 102004036661; 02.02.2005 DE 102005004659
(71) Anmelder: C. Rob. Hammerstein GmbH & Co.KG, 42699 Solingen (DE)
(72) Erfinder: Becker, Burckhard, 42657 Solingen (DE); Beneker, Wilfried, Dr., 42799 Leichlingen (DE); Schulz, Reiner, 40229 Düsseldorf (DE)
(74) Vertreter: Bauer, Wulf

(57) **Zusammenfassung**

Die Längsführung für Kraftfahrzeugsitze hat zwei längliche Schienen, nämlich eine Bodenschiene (20) und eine Sitzschiene (22), und Führungsmittel (34, 36) in Form von Wälz- und/oder Gleitkörpern, die zwischen den Schienen (20, 22) angeordnet sind. Jede Schiene hat im Profil gesehen a) jeweils ein L-förmigen Bereich, der von zwei L-Schenkeln (24, 26; 28, 30) gebildet ist und b) zwei Endbereiche, die jeweils an den L-förmigen Bereich anschließen, mehrfach gekrümmt verlaufen und an denen die Führungsmittel (34, 36) anliegen. Jeder Endbereich einer Schiene bildet unter wechselseitiger Verankerung mit jeweils einem Endbereich der anderen Schiene einen Umklammerungsbereich (50, 52). In jedem Umklammerungsbereich (50, 52) sind im Profil gesehen jeweils zwei Kanäle (42, 48) für Führungsmittel (34, 36). Jeder Umklammerungsbereich (50, 52) weist einen ersten Kanal (42) auf, der gegenüberliegende erste Führungsflächen (40) hat, die sich im Profil der Schienen gesehen im Wesentlichen in y-Richtung erstrecken. Diese Führungsflächen (40) legen die Position eines zwischen ihnen befindlichen Führungsmittels (34) in z-Richtung, aber nicht in y-Richtung fest.

## Beschreibung

Die Erfindung bezieht sich auf eine Längsführung für Fahrzeugsitze nach dem Oberbegriff des Anspruchs 1.

Aus der DE 197 17 667 A1 bzw. US 6,059,248 ist eine Längsführung der eingangs genannten Art bekannt. In den Ausführungsbeispielen sind die Führungsmittel als Kugeln ausgebildet. Jeder Umklammerungsbereich ist so ausgeführt, dass er für sich allein eine vollständige Längsführung bilden könnte. Die einzelnen Kugeln berühren die jeweiligen Schienen jeweils in Punkten. Verbindet man die Berührungspunkte einer Kugel, so liegt diese Linie auf einer Geraden, die in einem Winkel von größer als 15 bis 20° zur Vertikalen verläuft.

Die vorbekannte Längsführung hat sich grundsätzlich bewährt. Es müssen allerdings Vorkehrungen getroffen werden, damit immer alle Kugeln der vier Kanäle spielfrei an den Schienen anliegen. Hierzu ist eine gewisse Vorspannung innerhalb der Umklammerungsbereiche und möglicherweise eine spezielle individuelle Anpassung vorteilhaft.

Vorteilhaft bei der vorbekannten Längsführung ist es, dass die beiden Schienen einen relativ großen freien Innenquerschnitt begrenzen. In diesem freien Innenquerschnitt können zusätzliche Bauteile, wie beispielsweise eine Arretiereinrichtung, Teil eines elektrischen Antriebs, Teil einer Memoryeinrichtung usw. untergebracht werden.

Die Erfindung bezweckt eine Verbesserung der Längsführung der eingangs genannten Art. Sie hat es sich zur Aufgabe gemacht, die vorbekannte Längsführung dahingehend zu verbessern, dass gewisse fertigungsbedingte Abweichungen in der Profilform der einzelnen Schienen toleriert werden können und eine spielfreie Anlage aller Wälzkörper an den Schienen im Wesentlichen auch ohne Nacharbeiten gewährleistet ist. Diese Aufgabe wird gelöst durch die Längsführung mit den Merkmalen des Anspruchs 1.

Bei dieser Längsführung sind den Wälzkörpern jedes Umklammerungsbereichs klare Aufgaben zugeordnet. Die Wälzkörper, die sich im ersten Kanal befinden, sind vorwiegend, vorzugsweise ausschließlich für die Aufnahme von vertikalen Kräften, also Passagiergewicht usw. zuständig. Die Wälzkörper dieses ersten Kanals sind durch die Führungsflächen zwar in vertikaler Richtung, nicht aber in horizontaler Richtung fixiert. Dadurch können sich die Führungsflächen in horizontaler Richtung relativ zueinander verschieben, ohne dass dies durch den Wälzkörper behindert wird. Dadurch lassen sich Fertigungstoleranzen, die sich in unterschiedlichen Positionen der Führungsflächen zueinander auswirken, auffangen.

Die Wälzkörper, die sich in den zweiten Kanälen befinden, sind im Wesentlichen für die seitliche Anordnung und Zuordnung der beiden Schienen zueinander zuständig. Sie nehmen praktisch keine Tragkräfte auf, vorzugsweise wird also über sie in vertikaler Richtung kein Gewicht übertragen. Sie werden durch die Vorspannung, die innerhalb der Schienen existiert, in Anlage an ihre Führungsflächen, die zweiten Führungsflächen, gedrückt.

Vorzugsweise sind die Wälzkörper in den ersten Kanälen als Rollen ausgebildet. Rollen können günstiger die vertikalen Belastungen aufnehmen. Vorzugsweise sind die Wälzkörper in den zweiten Kanälen als Kugeln ausgeführt. Diese müssen wesentlich weniger Kräfte aufnehmen als die Wälzkörper des ersten Kanals. Es ist aber auch möglich, alle Walzkörper als Kugeln auszubilden.

Als vorteilhaft hat es sich herausgestellt, den zweiten Kanal so auszubilden, dass die zweiten Führungsflächen dieses zweiten Kanals im Wesentlichen seitlich an den Wälzkörpern, also den Kugeln, anliegen. Vorzugsweise liegen die Führungsmittel an den zweiten Führungsflächen in Anlagepunkten an, die auf einer Geraden liegen, welche ihrerseits in der yz-Ebene liegt und mit der z-Achse einen Winkel größer 45° einschließt. Aufgrund der im Wesentlichen seitlichen, bevorzugt in y-Richtung liegenden Einspannung der Kugeln der zweiten Kanäle sind diese bevorzugt für die seitliche Positionierung und Anordnung der Schienen zueinander zuständig. Dabei hat es sich als vorteilhaft erwiesen, dass sich die Geraden, auf der die Anlagepunkte liegen, unterhalb des Schienenprofils schneiden.

Während sich die Wälzkörper der ersten Kanäle in y-Richtung sowohl gegenüber der Führungsfläche der Bodenschiene als auch der Führungsfläche der Bodenschiene als auch der Führungsfläche der Sitzschiene verschieben können und im wesentlichen vorzugsweise in y-Richtung durch einen Käfig gehalten werden, ist es bei den Führungsmitteln der zweiten Kanäle so, dass diese vorteilhafterweise durch die Ausbildung der Ihnen zugeordneten zweiten Führungsflächen in der yz-Ebene fixiert sind und sich praktisch nur parallel zur x-Richtung bewegen können. Vorzugsweise hat zumindest eine der zweiten Führungsflächen im Profil gesehen eine konkave Ausbildung, wobei konkav von der Kugel in diesem zweiten Kanal aus gesehen ist. Dadurch hat diese Kugel keinen Freiheitsgrad in der yz-Ebene.

Vorzugsweise sind die Führungsmittel mindestens eines Umklammerungsbereiches in einem Käfig angeordnet. Durch einen Käfig wird die Zuordnung der Führungsmittel der beiden Kanäle des Umklammerungsbereichs vorgegeben und eingehalten. Ein Käfig ist insbesondere vorteilhaft, wenn als Führungsmittel in dem ersten Kanal Rollen bzw. unkugelige Körper wie z.B. fassförmige Walzen verwendet werden.

Vorzugsweise haben die Umklammerungsbereiche eine gewisse Symmetrie, so sind z.B. die Endbereiche zumindest einer Schiene mehr oder weniger spiegelbildlich. Insbesondere ist es vorteilhaft, die Position der Führungsmittel innerhalb der Umklammerungsbereiche spiegelbildlich auszuführen.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im Folgenden näher erläutert wird.

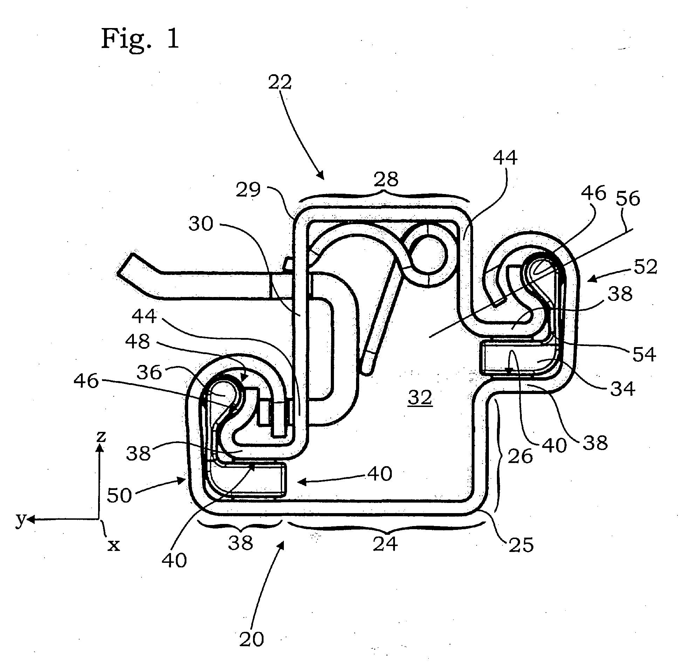

Die Zeichnung zeigt in ihrer einzigen Figur (Fig. 1) eine Stirnansicht einer Längsführung.

Für die Beschreibung wird ein Koordinatensystem mit x-Achse, y-Achse und z-Achse verwendet. Die x-Achse verläuft in Längsrichtung der Schienen, in dieser Richtung ist auch die Blickrichtung auf Fig. 1. Die y-Achse verläuft in der Waagerechten, die z-Achse verläuft in der Vertikalen und ist nach oben gerichtet. Bei Einbau in einem Kraftfahrzeug sind die Längsführungen teilweise horizontal und damit so eingebaut, dass unmittelbar das xyz-Koordinatensystem des Fahrzeugs übernommen werden kann. Überwiegend werden allerdings die Längsführungen so eingebaut, dass sie nach vorne leicht ansteigen. Dann hat das xyz-Koordinatensystem des Fahrzeugs zwar dieselbe y-Achse wie das oben gewählte Koordinatensystem der Längsführung, es ist aber um diese y-Achse um einen gewissen Winkel, den Steigungswinkel der Längsführung, gedreht.

In bekannter Weise besteht die Längsführung aus zwei Schienen, nämlich einer Bodenschiene 20, auch Unterschiene genannt, und einer Sitzschiene 22, auch Oberschiene genannt. In Fig. 1 sind die Schienenprofile ohne Profilverzweigung ausgeführt, sie können durch Formgebung aus einem Stahlblechzuschnitt hergestellt werden, beispielsweise durch Abwinkeln, Prägen, Rollen oder dergleichen. Es ist aber auch möglich, die Schienen als Strangpressprofile bzw. Strangzugprofile herzustellen. Die Sitzschiene 22 kann auch aus zwei einzelnen Profilteilen erstellt werden, wie dies aus der eingangs genannten DE 197 17 667 bekannt ist, siehe dort Fig. 2.

Jede Schiene 20, 22 hat im Profil gesehen jeweils einen etwa in Mitte ihres Profilzuschnitts liegenden, L-förmigen Bereich, der jeweils von zwei L-Schenkeln gebildet wird, nämlich den L-Schenkel 24 und 26 der Bodenschiene 20 und den L-Schenkeln 28, 30 der Sitzschiene 22. Sie gehen jeweils von einem Eckpunkt 25 bzw. 29, der auch zugleich Eckpunkt des Profils ist, aus. Im gezeigten Ausführungsbeispiel stehen die Schenkel im rechten Winkel zueinander. Jeder L-Schenkel einer Schiene ist jeweils parallel zu einem L-Schenkel der anderen Schiene. Es ist aber auch möglich, den Winkel zwischen den L-Schenkeln um bis zu 20 bis 30° größer oder kleiner als 90° zu wählen. Es sind im Wesentlichen die L-Schenkel, die einen freien Innenraum innerhalb der Schienenprofile begrenzen. Dieser freie Innenraum, der als Längskanal 32 bezeichnet wird, kann für Einbauten verwendet werden. Er ist vollständig frei von irgendwelchen Führungsmitteln. Die Erfindung bietet die Möglichkeit, diesen Längskanal für den jeweiligen Einsatzzweck der Längsführung optimal anzupassen. So können relativ große freie Querschnitte realisiert werden, beispielsweise hohe und/oder relativ breite Längskanäle.

Im Profil gesehen schließt sich an jeden L-Schenkel 24 bis 30 jeweils ein Endbereich an. Insgesamt hat also jede Schiene 20, 22 einen L-förmigen Bereich und zwei Endbereiche. Die Endbereiche können im Winkel vom jeweiligen Schenkel abgehen, zumeist im Winkel von 90°, sie können aber auch in gleicher Richtung wieder zugehörige L-Schenkel sich anschließen. Die Endbereiche haben einerseits eine im Wesentlichen hakenförmige Ausbildung, andererseits liegen an ihnen die Führungsmittel 34, 36 an. Es sind insgesamt vier Kanäle der Führungsmittel 34, 36 vorgesehen. In jedem Kanal befinden sich mehrere Führungsmittel des gleichen Typs, also entweder Rollen 34 oder Kugeln 36.

In der gezeigten Ausführung sind in jedem die Endbereiche beider Schienen haben ein Profilteil 38, das mit dem benachbarten L-Schenkel verbunden ist. Dieses Profilteil 38 verläuft im Querschnitt gesehen, der in der yz-Ebene liegt, parallel zur y-Achse, liegt also in der xy-Ebene. Die Profilteile beider Schienen bilden jeweils zwei gegenüberliegende Paarungen von ersten Führungsflächen 40. Diese grenzen einen ersten Kanal 42, in denen sich die Rollen 34 befinden. Es ist erkennbar, dass die Rollen in y-Richtung nicht durch die ersten Führungsflächen 40 festgelegt sind. Die ersten Führungsflächen 40 bestimmen allerdings die Position der Rollen 34 in z-Richtung. Die ersten Führungsflächen 40 sind in y-Richtung etwas länger, vorzugsweise 30 bis 50% länger als die entsprechende axiale Abmessung der Rollen 34.

Im unteren, horizontalen L-Schenkel 24 der Bodenschiene 20 verlängert das Profilteil 38 diesen L-Schenkel 24. Der andere L-Schenkel 26 erstreckt sich in z-Richtung und etwa nur über die Hälfte der gesamten Profilhöhe, dort knickt er nach außen in einem Winkel von 90° in das Profilteil 38 ab. Bei der Sitzschiene 22 sind diese Verhältnisse wie folgt: An die L-Schenkel 28, 30 ist ein Zwischenstück 44 angesetzt, im Falle des horizontalen L-Schenkels 28 geschieht dies in einem Winkel von 90°, im Falle eines vertikalen L-Schenkels 30 in Verlängerung dieses Schenkels. Die Zwischenstücke 44 könnte man auch als Bestandteil der jeweiligen L-Schenkel ansehen. Von den Zwischenstücken 44 geht dann wiederum das jeweilige Profilteil 38 aus, es steht jeweils im Winkel von 90° zum zugehörigen Zwischenstück 44.

Jenseits des Profilteils 38 bildet jeder Endbereich zweite Führungsflächen 46 aus, die wiederum einander gegenüberliegen. Diese sind allerdings nun so ausgebildet, dass mindestens eine zweite Führungsfläche konkav ist, also die an ihr anliegende Kugel umfasst. Die zweiten Führungsflächen 46 sind so ausgebildet, dass sie in der yz-Ebene keine Bewegungsmöglichkeit der Führungsmittel, die hier als Kugeln 36 ausgebildet sind, zulassen. Insoweit besteht ein Gegensatz zu den ersten Führungsflächen 40, die den ihnen zugeordneten Führungsmitteln 34 eine Bewegung in y-Richtung ermöglichen. Die beiden zweiten Führungsflächen 46 bilden jeweils einen zweiten Kanal 48. Es ist auch möglich, die Führungsmittel 34, 36 durch Gleitmittel zu ersetzen, so können beispielsweise die Kugeln 36 durch längliche Kunststoffstäbe ausgebildet sein, die Rollen 34 können durch längliche Gleitstangen mit im wesentlichen rechteckförmigen Querschnitt realisiert sein.

Die Endbereiche der Schienen 20, 22 sind wechselseitig ineinander verhakt und bilden jeweils einen Umklammerungsbereich 50, 52. Das Profil gem. Fig.1 hat einen linken Umklammerungsbereich 50, er befindet sich in der linken, unteren Profilecke. Das Profil hat weiterhin einen rechten Umklammerungsbereich 52, er befindet sich auf der rechten, oberen Seite des Profils und erstreckt sich nahezu, aber nicht ganz soweit nach oben wie der L-Schenkel 28. Grob gesehen haben die Umklammerungsbereiche 50, 52 etwa die halbe Höhe des Längskanals 32 und etwa die halbe Breite des Längskanals 32.

Die Führungsmittel 34, 36 jedes Umklammerungsbereichs 50, 52 sind durch einen Käfig 54 miteinander verbunden und zueinander gehalten. Als Käfig 54 kommt beispielsweise ein Metall- oder Kunststoffrahmen in Frage, der die Führungsmittel im Wesentlichen in x-Richtung berührt und hält. Üblicherweise sind pro Kanal 42, 48 jeweils zwei baugleiche Führungsmittel 34, 36 vorgesehen, der Käfig 54 hält entweder alle Führungsmittel eines Umklammerungsbereichs zusammen oder nur die jeweils zwei in z-Richtung übereinander liegenden Führungsmittel, im letzteren Fall sind dann zwei oder mehr Käfige 54 vorgesehen.

Wie aus der Fig. 1 ersichtlich ist, befinden sich in den Umklammerungsbereichen 50, 52 die ersten Kanäle 42 jeweils unterhalb der zweiten Kanäle 48. Bei der Bodenschiene 20 befinden sich die erste Führungsfläche 40 und die zweite Führungsfläche 46 auf der Innenfläche des Endbereichs, der mit seiner Außenseite die untere bzw. die seitliche Außenfläche der Längsführung bildet.

Die beiden Umklammerungsbereichen 50, 52 liegen im Wesentlichen diagonal einander gegenüber. Mindestens eine der Schienen 20, 22 ist mit einer elastischen Vorspannung versehen. Diese Schiene wirkt wie eine Schenkelfeder, wobei die jeweiligen L-Schenkel und die jeweilig anhängenden Endbereiche die Federschenkel bilden und die Federbewegung um eine x-Richtung verlaufende Achse durch den jeweiligen Eckpunkt 25 bzw. 29 verläuft. Ist die Bodenschiene 20 als Schenkelfeder ausgebildet, so federt sie um den Eckpunkt 25 nach innen, ihre Endbereiche haben also die Tendenz, sich einander zu nähern. Dies liegt daran, dass die Bodenschiene 20 als umgreifende Schiene ausgeführt ist. Ist die Sitzschiene 22 als Schenkelfeder ausgebildet, haben ihre beiden Endbereiche die Tendenz, sich voneinander zu entfernen. Üblicherweise sind beide Schienen 20, 22 mit einer elastischen Vorspannung versehen.

Die zweiten Führungskanäle 44 der Sitzschiene 20 befinden sich in unmittelbarer Nähe eines jeweiligen Profilendes. Die zweiten Führungsflächen 46 der Bodenschiene 20 befinden sich in einer gewissen Entfernung vom freien Profilende.

Zieht man in der Fig. 1 eine Gerade durch den Mittelpunkt der beiden Führungsmittel 34, 36 jedes Umklammerungsbereichs, so schneiden sich diese Geraden unterhalb des Profils der Längsführung. Vorzugsweise schneiden sie sich in z-Richtung unterhalb eines Mittelpunktes des Längskanals 34 und etwa um die vertikale Höhe des Längskanals 32 von diesem Mittelpunkt nach unten versetzt.

Die zweiten Führungsflächen 46 sind jeweils konkav. Verbindet man die Mittelpunkte der Berührungslinien der Kugel 36 mit den beiden zweiten Führungsflächen, erhält man eine Gerade 56. Diese Gerade 56 verläuft in einem Winkel zur z-Richtung, der größer als 45° ist. Vorzugsweise liegt der Winkel zwischen 45° und 60°. Er kann bis zu 90° betragen. Dies bedeutet, dass die Kugeln 36 wesentlich mehr in y-Richtung eingespannt sind als in z-Richtung.

Zwischen den Schienen 20, 22 sind in y-Richtung Luftspalte vorgesehen. Dadurch kann die Sitzschiene 22 unterschiedliche Positionen in y-Richtung gegenüber der Bodenschiene 20 einnehmen. Es können Fertigungsabweichungen ausgeglichen werden.

## Patentansprüche

1. Längsführung für Fahrzeugsitze, insbesondere Kraftfahrzeugsitze, mit zwei länglichen Schienen, nämlich einer Bodenschiene (20) und einer Sitzschiene (22), und mit Führungsmitteln (34, 36) in Form von Wälz- und/oder Gleitkörpern, die zwischen den Schienen (20, 22) angeordnet sind, wobei jede Schiene im Profil gesehen a) jeweils ein L-förmigen Bereich, der von zwei L-Schenkeln (24, 26; 28, 30) gebildet ist und b) zwei Endbereiche hat, die jeweils an den L-förmigen Bereich anschließen, mehrfach gekrümmt verlaufen und an denen die Führungsmittel (34, 36) anliegen, und wobei weiterhin jeder Endbereich einer Schiene unter wechselseitiger Verankerung mit jeweils einem Endbereich der anderen Schiene einen Umklammerungsbereich (50, 52) bildet, wobei in jedem Umklammerungsbereich (50, 52) im Profil gesehen jeweils zwei Kanäle (42, 48) für Führungsmittel (34, 36), insbesondere Wälzkörper, vorgesehen sind, **dadurch gekennzeichnet, dass** jeder Umklammerungsbereich (50, 52) einen ersten Kanal (42) aufweist, dass in diesem ersten Kanal (42) gegenüberliegende erste Führungsflächen (40) ausgebildet sind, die sich im Profil der Schienen gesehen im Wesentlichen in y-Richtung erstrecken und dass diese Führungsflächen (40) die Position eines zwischen ihnen befindlichen Führungsmittels (34) in z-Richtung, aber nicht in y-Richtung festlegen.

2. Längsführung nach Anspruch 1, **dadurch gekennzeichnet, dass** jeder Umklammerungsbereich (50, 52) einen zweiten Kanal (48) aufweist, dass dieser zweite Kanal (48) gegenüberliegende zweite Führungsflächen (46) aufweist, von denen mindestens eine im Profil gesehen, konkav ist.

3. Längsführung nach Anspruch 1, **dadurch gekennzeichnet, dass** jeder Umklammerungsbereich (50, 52) einen zweiten Kanal (48) aufweist, dass ein in diesem zweiten Kanal (48) angeordnetes zweites Führungsmittel (36) an den zweiten Führungsflächen (46) in Anlagepunkten anliegt, die auf einer Geraden (56) liegen, welche in einer yz-Ebene liegt und mit der z-Achse einen Winkel größer als 45° einschließt.

4. Längsführung nach Anspruch 1, **dadurch gekennzeichnet, dass** in mindestens einem der beiden Umklammerungsbereiche (50, 52) die Führungsmittel (34, 36) in einem Käfig (54) angeordnet sind.

5. Längsführung nach Anspruch 1, **dadurch gekennzeichnet, dass** die ersten Führungsflächen (40) eben sind und vorzugsweise in der xy-Ebene verlaufen.

6. Längsführung nach Anspruch 1, **dadurch gekennzeichnet, dass** von den zweiten Führungsflächen (46) mindestens eine konkav ist und dass die zweiten Führungsflächen (46) ein Führungsmittel (36) in der yz-Ebene definiert positionieren.

7. Längsführung nach Anspruch 1, **dadurch gekennzeichnet, dass** in den Umklammerungsbereichen (50, 52) der erste Kanal (42) sich unterhalb des zweiten Kanals (48) befindet.

8. Längsführung nach Anspruch 1, **dadurch gekennzeichnet, dass** in einem Umklammerungsbereich eine erste Führungsfläche (40) in Verlängerung des benachbarten L-Schenkels (24) verläuft.

9. Längsführung nach Anspruch 1, **dadurch gekennzeichnet, dass** von den beiden ersten Führungsflächen (40), die die Bodenschiene (20) ausbildet, eine Führungsfläche in Verlängerung des benachbarten L-Schenkels (24) verläuft und die andere erste Führungsfläche (40) in einem Winkel von etwa 90° bis zum benachbarten L-Schenkel (26) verläuft.

10. Längsführung nach Anspruch 1, **dadurch gekennzeichnet, dass** die beiden Umklammerungsbereiche (50, 52) im Wesentlichen diagonal einander gegenüberliegen.

11. Längsführung nach Anspruch 1, **dadurch gekennzeichnet, dass** mindestens eine der beiden Schienen eine elastische Vorspannung aufweist, wobei sie eine Schenkelfeder bilden, deren Federschenkel durch die beiden L-Schenkel gebildet sind.

12. Längsführung nach Anspruch 1, **dadurch gekennzeichnet, dass** die Position der Führungsmittel in dem einen Umklammerungsbereich spiegelbildlich ist zur Position der Führungsmittel in dem anderen Umklammerungsbereich, vorzugsweise dass für die Führungsmittel der beiden Umklammerungsbereiche jeweils baugleiche Käfige (54) verwendet werden.

13. Längsführung nach Anspruch 1, **dadurch gekennzeichnet, dass** zwischen den Schienen (20, 22) in y-Richtung Luftspalte vorgesehen sind.
